# EUROPEAN PATENT APPLICATION

(11) **EP 4 822 507 A1**
(43) Date of publication of application: **14.10.2026**
(21) Application number: 24915452.7
(22) Date of filing: 30.12.2024
(51) Int. Cl.: G06F 3/04845, G06F 3/04842, G06F 3/00, G06F 3/041

(54) **ELECTRONIC DEVICE FOR PERFORMING EDITING ON BASIS OF REPRESENTATIVE IMAGE WITH CHANGED IMAGE ATTRIBUTES, AND CONTROL METHOD THEREFOR**

(30) Priority: 02.01.2024 KR 20240000463; 01.02.2024 KR 20240015759
(71) Applicant: Samsung Electronics Co., Ltd., Suwon-si, Gyeonggi-do 16677 (KR)
(72) Inventor: LEE, Joohyung, Suwon-si Gyeonggi-do 16677 (KR); KIM, Jieun, Suwon-si Gyeonggi-do 16677 (KR)
(74) Representative: HGF
(86) International application number: PCT/KR2024/021479
(87) International publication number: WO 2025/147040

(57) **Abstract**

An electronic device for performing editing on the basis of a representative image with changed image attributes, and a control method therefor are provided. The electronic device according to one embodiment of the present disclosure can be configured to: capture a motion image through at least one camera; receive a user input selecting a first frame from among a plurality of frames included in the motion image, in order to change a first representative image to a second representative image that differs from the first representative image; in response to the reception of the user input, identify image attributes of the first representative image so as to apply the identified image attributes to the selected first frame; and, through a touch screen display, display, as the second representative image for the motion image, the first frame to which the identified image attributes have been applied.

## Description

### [Technical Field]

The present disclosure relates to an electronic device for performing editing based on a representative image having a changed image attribute, and a method for controlling the same.

### [Background Art]

The number of various services and additional functions provided through electronic device, for example, portable devices such as smartphones (e.g., Samsung^{®} Galaxy^{®}), is gradually increasing. In order to increase the utility value of these electronic devices and satisfy the needs of various users, communication service providers or electronic device manufacturers have provided various functions and competitively developed electronic devices to differentiate themselves from other companies. Accordingly, various functions provided through wearable devices have also been increasingly sophisticated.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Problem]

An electronic device may capture and provide a motion image. A motion image referred to in the disclosure may include an image including an image captured by a user and a video file during a specified time period before and after the image capturing. The image captured by the user may be stored in the electronic device as a representative image, and the representative image may be provided to the user through a specified application (e.g., Gallery application). The representative image may be stored in the electronic device with a higher quality than the video file. Based on a user input, the electronic device may change the representative image to at least one frame among a plurality of frames included in the video file and provide it. The electronic device may provide the representative image or a changed representative image for non-destructive editing. Non-destructive editing referred to in the disclosure may refer to a function or operation of separately storing an original image before various editing effects are applied and performing re-editing using the stored original image. The electronic device may perform non-destructive editing on the representative image or the changed representative image based on a user input.

Conventionally, when a user changes a representative image for a motion image, the user selects a representative image to be changed from video frames stored with a relatively low quality, which inevitably results in providing the changed representative image with a low quality. Accordingly, when the changed representative image is edited, the editing is performed on an image with a lower quality than the original representative image, making it impossible to obtain a user-desired editing effect. Moreover, when non-destructive editing is performed on the changed representative image, original data for the changed representative image should be separately stored, which may make it difficult to efficiently utilize memory resources.

### [Technical Solution]

According to an embodiment of the disclosure, an electronic device may be provided, which may provide a representative image having substantially the same quality as a representative image prior to changing, even when a representative image for a motion image is changed, by identifying attribute information of the representative image (e.g., a first representative image) prior to the changing and applying the identified attribute information to the changed representative image (e.g., a second representative image).

According to an embodiment of the disclosure, an electronic device may be provided, which may provide a user-desired editing result, even if editing (e.g., non-destructive editing) is performed on a changed representative image, by identifying attribute information of a representative image (e.g., a first representative image) prior to changing and applying the identified attribute information to the changed representative image (e.g., a second representative image).

According to an embodiment of the disclosure, an electronic device may be provided, which may efficiently utilize memory resources by performing re-editing based on an original frame extracted from a video file using time information (e.g., a timestamp) of a changed representative image (e.g., a second representative image), in order to provide a re-edited image (e.g., a fourth representative image) when re-editing is performed on an image (e.g., a third representative image) in which the changed representative image was edited.

An electronic device according to an embodiment of the disclosure may include a touch screen display, at least one camera, at least one processor, and memory storing instructions that, when executed by the at least one processor, cause the electronic device to capture a motion image via the at least one camera, wherein the motion image includes a representative frame corresponding to a first representative image and a plurality of frames, receive a user input for selecting a first frame from among the plurality of frames included in the motion image in order to change the first representative image into a second representative image that is different from the first representative image, identify an image attribute of the first representative image and apply the identified the image attribute to the selected first frame, based on the user input, and display the first frame to which the identified image attribute is applied as the second representative image for the motion image via the touch screen display.

A method according to an embodiment of the disclosure may include capturing a motion image via at least one camera of an electronic device, wherein the motion image includes a representative frame corresponding to a first representative image and a plurality of frames, receiving a user input for selecting a first frame from among the plurality of frames included in the motion image in order to change the first representative image into a second representative image that is different from the first representative image, identifying an image attribute of the first representative image and applying the identified the image attribute to the selected first frame, based on the user input, and displaying the first frame to which the identified image attribute is applied as the second representative image for the motion image via a touch screen display of the electronic device.

A non-transitory computer-readable recording medium according to an embodiment of the disclosure may be configured to store computer-readable instructions that, when executed by a processor of an electronic device, cause the electronic device to capture a motion image via at least one camera of the electronic device, wherein the motion image includes a representative frame corresponding to a first representative image and a plurality of frames, receive a user input for selecting a first frame from among the plurality of frames included in the motion image in order to change the first representative image into a second representative image that is different from the first representative image, identify an image attribute of the first representative image and apply the identified the image attribute to the selected first frame, based on the user input, and display the first frame to which the identified image attribute is applied as the second representative image for the motion image via a touch screen display of the electronic device.

### [Brief Description of Drawings]

FIG. 1 is a block diagram illustrating an electronic device in a network environment according to various embodiments of the disclosure.
FIG. 2 is an exemplary diagram illustrating a function or operation of changing a representative image by an electronic device according to an embodiment of the disclosure.
FIG. 3 is an exemplary diagram illustrating a motion image and a representative image according to an embodiment of the disclosure.
FIGS. 4A and 4B are exemplary diagrams illustrating a function or operation of changing a representative image (e.g., a first representative image) to another representative image (e.g., a second representative image) according to an embodiment of the disclosure.
FIG. 5 is an exemplary diagram illustrating a function or operation of applying an HDR attribute among image attributes of an original representative image (e.g., a first representative image) to a changed representative image (e.g., a second representative image) according to an embodiment of the disclosure.
FIG. 6 is an exemplary diagram illustrating a function or operation of displaying an image by applying a rendering attribute during image editing and storing an edited image by an electronic device 101 according to an embodiment of the disclosure.
FIG. 7 is an exemplary diagram illustrating a function or operation of storing time information (e.g., a timestamp) of an original image (e.g., a second representative image) of an image (e.g., a third representative image) obtained by editing a changed representative image, and performing re-editing on the third representative image using the time information by an electronic device according to an embodiment of the disclosure.
FIG. 8A is an exemplary diagram illustrating a function or operation of selecting a frame corresponding to time information from a video file using the time information by an electronic device according to an embodiment of the disclosure.
FIG. 8B is an exemplary diagram illustrating a function or operation of storing a re-edited second representative image (e.g., a fourth representative image) stored in a first storage according to an embodiment of the disclosure.
FIG. 9 is an exemplary diagram illustrating an electronic device according to an embodiment of the disclosure.

### [Mode for Carrying out the Invention]

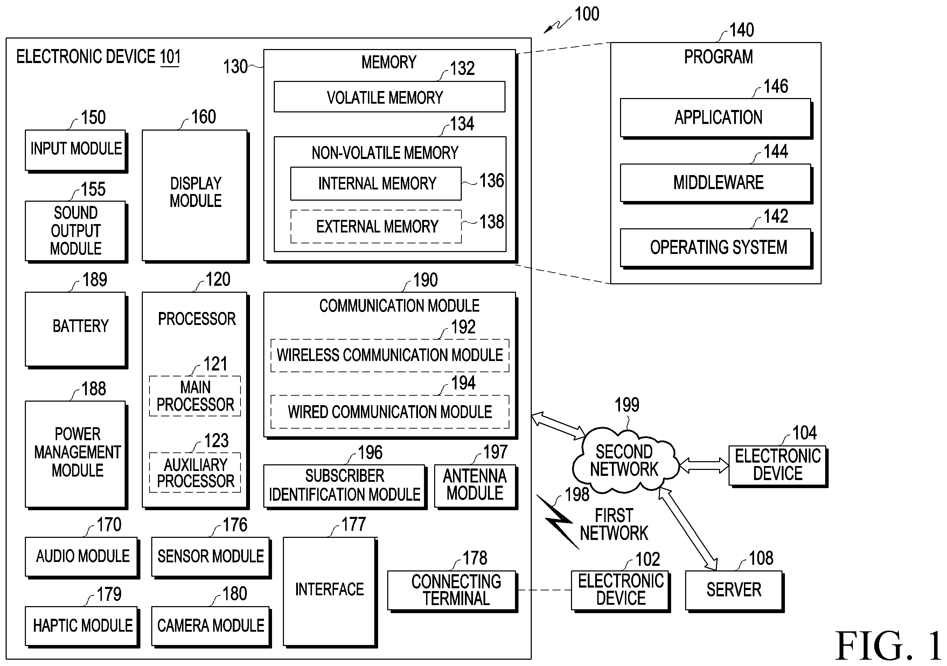

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

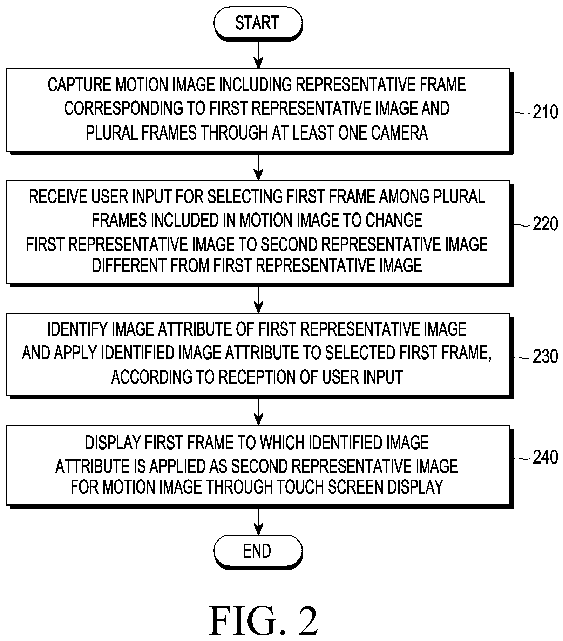

FIG. 2 is an exemplary diagram illustrating a function or operation of changing a representative image by the electronic device 101 according to an embodiment of the disclosure.

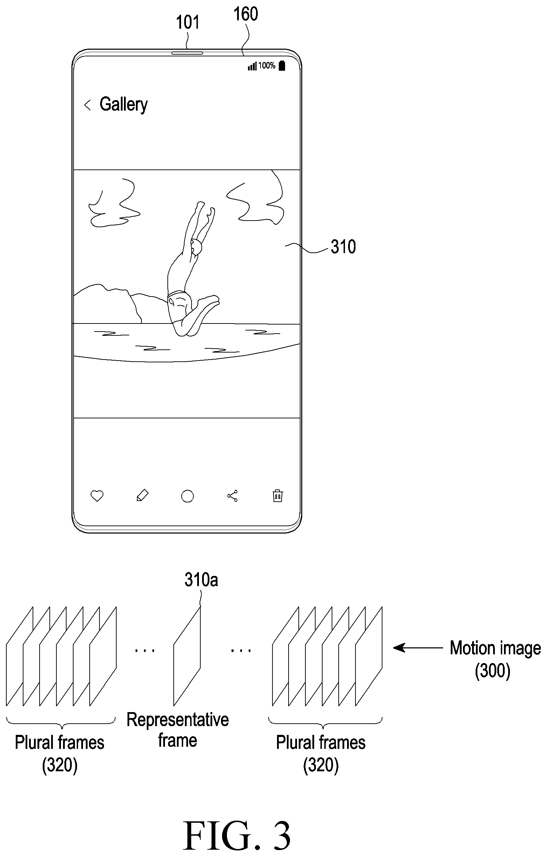

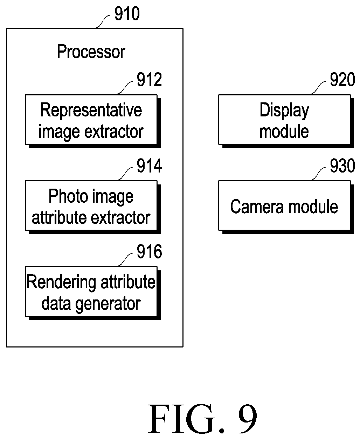

Referring to FIG. 2, in operation 210, the electronic device 101 according to an embodiment of the disclosure may capture a motion image 300 including a representative frame (e.g., a first representative image 310) corresponding to a first representative image and a plurality of frames 320 through at least one camera (e.g., the camera module 180 of FIG. 1). FIG. 3 is an exemplary diagram illustrating a motion image and a representative image according to an embodiment of the disclosure. Referring to FIG. 3, the motion image 300 according to an embodiment of the disclosure may include an image including an image (e.g., the first representative image 310 as a still image) captured by a user and a video file (e.g., the plurality of frames 320) during a specified time period before and after the image capturing. The first representative image 310 according to an embodiment of the disclosure may correspond to a representative frame 310a. According to an embodiment of the disclosure, the image captured by the user may be stored as a representative image (e.g., the first representative image 310) in the electronic device 101, and an original representative image (e.g., the first representative image 310) may be provided to the user through a specified application (e.g., Gallery application). The original representative image (e.g., the first representative image 310) according to an embodiment of the disclosure may be stored with a higher quality than the video file (e.g., the plurality of frames 320) in the electronic device. For example, the original representative image (e.g., the first representative image 310) according to an embodiment of the disclosure may include an image which has a resolution of 12 megapixels and to which an HDR attribute is applied. The video file (e.g., the plurality of frames 320) according to an embodiment of the disclosure may include a plurality of images which have a resolution of 2 megapixels and to which an SDR attribute is applied. The original representative image (e.g., the first representative image 310) according to an embodiment of the disclosure may be designated as an image obtained at a time the user captures a specified object (e.g., an image being displayed through the electronic device 101 when the user touches a capture button). A representative image extractor (e.g., a representative image extractor 912 of FIG. 9) according to an embodiment of the disclosure may select the original representative image based on a user input. The original representative image (e.g., the first representative image 310) according to an embodiment of the disclosure may include an image corresponding to an arbitrarily designated frame among the plurality of frames 320. The original representative image (e.g., the first representative image 310) according to an embodiment of the disclosure may include an image corresponding to any one frame designated by the user among the plurality of frames 320.

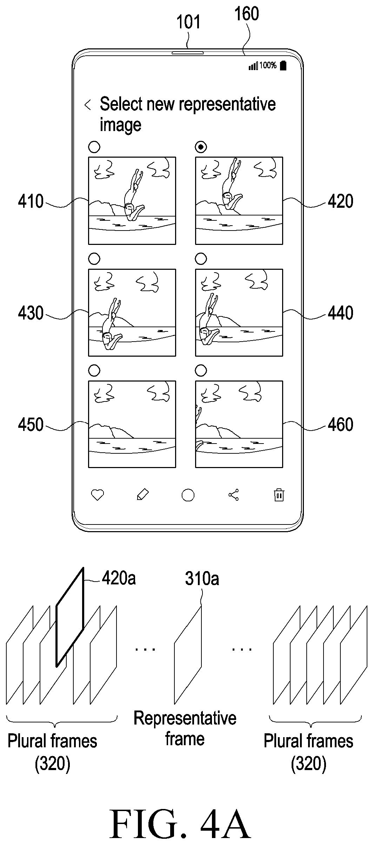

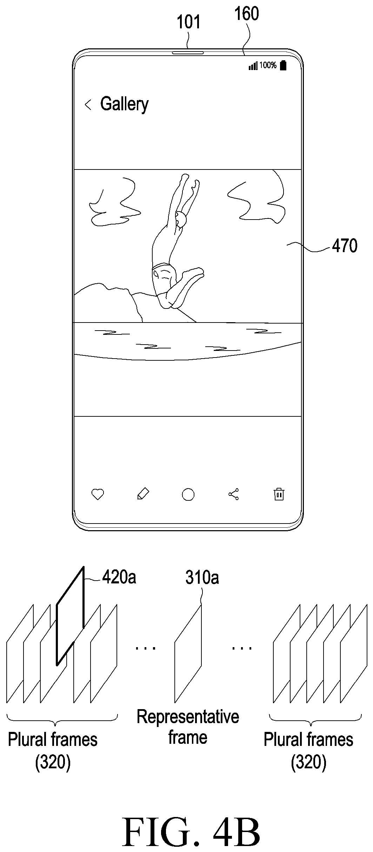

In operation 220, the electronic device 101 according to an embodiment of the disclosure may obtain a user input for selecting a first frame 420a from among the plurality of frames 320 included in the motion image 300 in order to change the first representative image 310 to a second representative image 470 different from the first representative image 310. FIGS. 4A and 4B are exemplary diagrams illustrating a function or operation of changing a representative image (e.g., the first representative image 310) to another representative image (e.g., the second representative image 470) according to an embodiment of the disclosure. Referring to FIGS. 4A and 4B, the electronic device 101 according to an embodiment of the disclosure may provide images corresponding to frames included in the plurality of frames 320 as candidate images (e.g., a first candidate image 420, a second candidate image 430, a third candidate image 440, a fourth candidate image 450, and a fifth candidate image 460). The electronic device 101 according to an embodiment of the disclosure may obtain a selection input for any one candidate image (e.g., the second candidate image 420) among the candidate images (e.g., the first candidate image 420, the second candidate image 430, the third candidate image 440, the fourth candidate image 450, and the fifth candidate image 460). The electronic device 101 according to an embodiment of the disclosure may determine the selected candidate image (e.g., the second candidate image 420) as a new representative image (e.g., the second representative image 470). The second representative image 470 according to an embodiment of the disclosure may correspond to the first frame 420a. As illustrated in FIG. 4B, the electronic device 101 according to an embodiment of the disclosure may display the new representative image (e.g., the second representative image 470). In this case, image attributes of the original representative image (e.g., the first representative image 310) may be applied to the new representative image (e.g., the second representative image 470) according to an embodiment of the disclosure. A photo image attribute extractor (e.g., a photo image attribute extractor 914 of FIG. 9) according to an embodiment of the disclosure may extract image attributes (e.g., image resolution, SDR attribute, HDR attribute, color space information, EXIF information, ICC profile, and/or SEF data) of the original representative image and store the extracted image attributes. When storing a representative image (e.g., the original representative image and/or an edited original representative image), the photo image attribute extractor (e.g., the photo image attribute extractor 914 of FIG. 9) according to an embodiment of the disclosure may process the representative image so that attributes identical or similar to the stored image attributes may be applied to the representative image.

In operation 230, the electronic device 101 (e.g., a rendering attribute data generator 916 of FIG. 9) according to an embodiment of the disclosure may identify the image attributes of the first representative image 310 based on the reception of the user input in operation 220 and apply the identified image attributes to the selected first frame 420a. A rendering attribute data generator (e.g., the rendering attribute data generator 916 of FIG. 9) according to an embodiment of the disclosure may generate data required for rendering from data from which the photo image attributes were extracted. The image attributes according to an embodiment of the disclosure may include various attributes such as image resolution, whether SDR is applied, color space, EXIF, ICC profile, and SEF data. The SEF data according to an embodiment of the disclosure may include information such as timestamp information of the image, non-destructive editing information, and information about an applied effect. According to an embodiment of the disclosure, for example, the electronic device 101 according to an embodiment of the disclosure may determine whether an SDR attribute is applied to the first representative image 310. When the SDR attribute is applied to the first representative image 310, the electronic device 101 according to an embodiment of the disclosure may generate a gain map for the selected video frame (e.g., the first frame 420a). The gain map according to an embodiment of the disclosure may be information and/or data required to apply the SDR attribute to a specified image. Based on the generated gain map, the electronic device 101 according to an embodiment of the disclosure may at least temporarily store the first frame 420a to which the SDR attribute is applied, and display an image (e.g., the second representative image 470) corresponding to the first frame 420a to which the SDR attribute is applied through the display module 160. Alternatively, for example, when the first representative image 310 according to an embodiment of the disclosure is identified as an image based on a resolution of 12 megapixels, the electronic device 101 may upscale the selected video frame (e.g., the first frame 420a) to 12 megapixels, store it at least temporarily in the electronic device 101, and display an image (e.g., the second representative image 470) corresponding to the upscaled first frame 420a through the display module 160. In this case, the gain map according to an embodiment of the disclosure may also be upscaled at the same ratio. Alternatively, for example, when the original representative image (e.g., the first representative image 310) includes an image based on WCG P3 color, an image in which the color space attribute is changed by applying a WCG P3 transform scheme (e.g., sRGB to P3 transform) to the first frame 420a may be at least temporarily stored as the representative image in the electronic device 101. Alternatively, for example, EXIF information, color space information, and/or an ICC profile of the original representative image (e.g., the first representative image 310) may be applied to the first frame 420a.

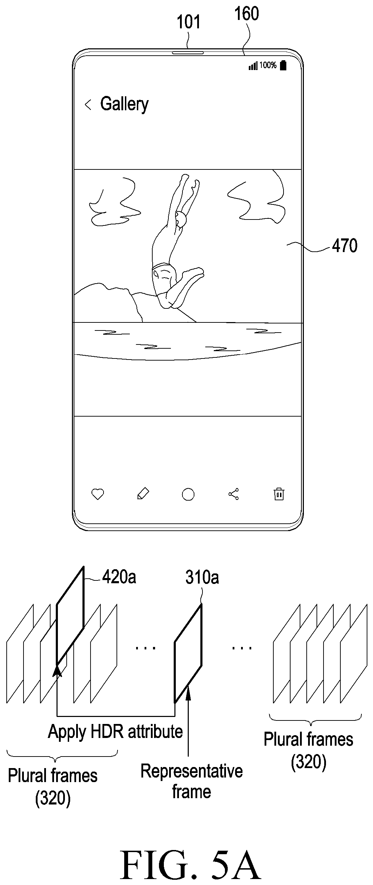

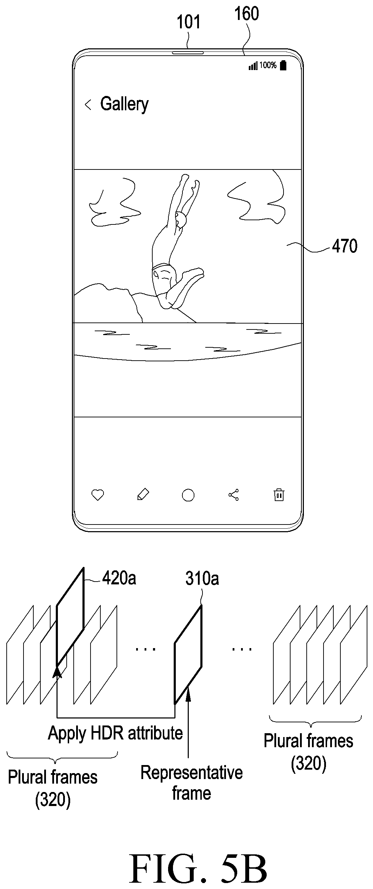

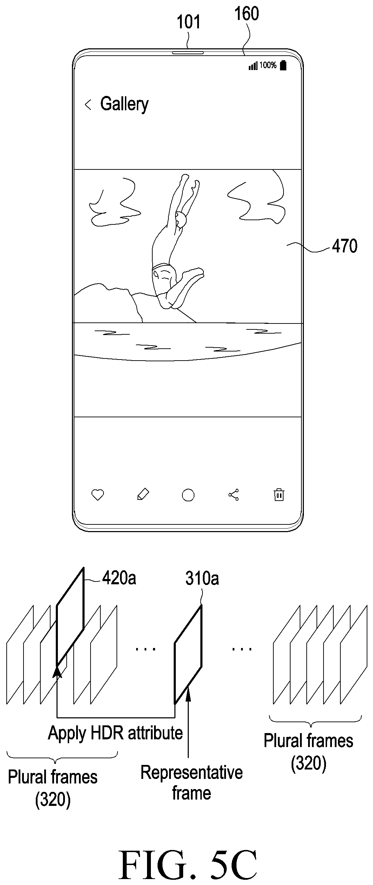

FIG. 5 is an exemplary diagram illustrating a function or operation of applying an HDR attribute among image attributes of an original representative image (e.g., the first representative image 310) to a changed representative image (e.g., the second representative image 470) according to an embodiment of the disclosure. Referring to FIG. 5A, the electronic device 101 according to an embodiment of the disclosure may determine whether an SDR attribute is applied to the first representative image 310. When the SDR attribute is applied to the first representative image 310, the electronic device 101 according to an embodiment of the disclosure may generate a gain map for the selected video frame (e.g., the first frame 420a). Based on the generated gain map, the electronic device 101 according to an embodiment of the disclosure may at least temporarily store the first frame 420a to which the SDR attribute is applied, and display an image (e.g., the second representative image 470) corresponding to the first frame 420a to which the SDR attribute is applied through the display module 160. According to an embodiment, the electronic device may identify the resolution of the first representative image 310. When the first representative image 310 is identified as an image based on a resolution of 12 megapixels, the electronic device 101 may upscale the selected video frame (e.g., the first frame 420a) to 12 megapixels, store it at least temporarily in the electronic device 101, and display an image (e.g., the second representative image 470) corresponding to the upscaled first frame 420a through the display module 160. In this case, the gain map according to an embodiment of the disclosure may also be upscaled at the same ratio. Further, for example, according to an embodiment of the disclosure, when the original representative image (e.g., the first representative image 310) includes an image based on WCG P3 color, an image in which a color space attribute is changed by applying a WCG P3 transform scheme (e.g., sRGB to P3 transform) to the first frame 420a may be at least temporarily stored as the representative image in the electronic device 101.

In operation 240, the electronic device 101 according to an embodiment of the disclosure may display the first frame 420a, to which the identified image attributes are applied, as the second representative image 470 for the motion image 300 through a touch screen display (e.g., the display module 160). As illustrated in FIG. 4B, the electronic device 101 according to an embodiment of the disclosure may display, for example, a representative image (e.g., the second representative image 470) to which the HDR attribute is applied and which is upscaled to a resolution of 12 megapixels through the touch screen display (e.g., the display module 160). The motion image 300 including the second representative image 470 according to an embodiment of the disclosure may be at least temporarily stored in the memory 160 (e.g., a first storage 610).

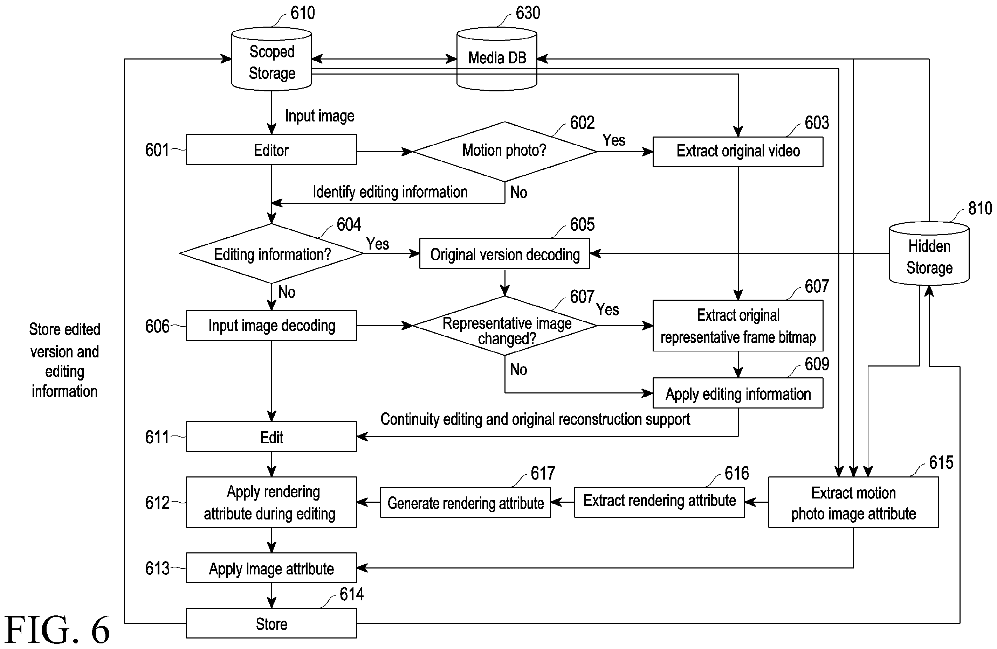

FIG. 6 is an exemplary diagram illustrating a function or operation of displaying an image by applying a rendering attribute during image editing and storing an edited image by the electronic device 101 according to an embodiment of the disclosure.

Referring to FIG. 6, in operation 601, the electronic device 101 according to an embodiment of the disclosure may execute a specified application (e.g., an image editing application). The electronic device 101 according to an embodiment of the disclosure may load an image selected by the user from the first storage 610 (e.g., scoped storage). In operation 602, the electronic device 101 according to an embodiment of the disclosure may determine whether the image selected by the user is a motion image. In operation 603, when the image selected by the user is a motion image, the electronic device 101 according to an embodiment of the disclosure may extract original video data from a second storage 810 (e.g., hidden storage). In operation 604, the electronic device 101 according to an embodiment of the disclosure may determine whether editing information corresponding to the input image is stored. In operation 606, when editing information corresponding to the input image is not stored, the electronic device 101 according to an embodiment of the disclosure may decode the loaded input image. In operation 607, during the process of decoding the input image, the electronic device 101 according to an embodiment of the disclosure may determine whether a representative image of the motion image has been changed (e.g., changed from a first representative image to a second representative image). In operation 605, when editing information exists, the electronic device 101 according to an embodiment of the disclosure may load and decode an original image of the motion image from the second storage (e.g., hidden storage). In operation 608, when determining that the representative image of the motion image has been changed, the electronic device 101 according to an embodiment of the disclosure may extract bitmap data of the changed original representative image (e.g., the second representative image) from the original motion image. In operation 609, the electronic device 101 according to an embodiment of the disclosure may apply editing information that is applied to the original representative image. Through this, an editing function may be provided to the user. In operation 611, the electronic device 101 according to an embodiment of the disclosure may provide the original representative image to which the editing information is applied as an image for editing through a specified application. In operation 612, the electronic device 101 according to an embodiment of the disclosure may apply a rendering attribute of the original representative image (e.g., the first representative image) to the image provided for editing. To this end, in operation 615, the electronic device 101 according to an embodiment of the disclosure may extract image attributes of the motion image. In operation 616, the electronic device 101 according to an embodiment of the disclosure may extract information about a rendering attribute from the extracted image attributes. In operation 617, the electronic device 101 according to an embodiment of the disclosure may generate the rendering attribute (e.g., generate a gain map) based on the extracted information about the rendering attribute. In operation 613, the electronic device 101 according to an embodiment of the disclosure may apply an image attribute changed by the editing to the edited representative image. In operation 614, the electronic device 101 according to an embodiment of the disclosure may store the image edited in operation 613 in the first storage 610 (e.g., scoped storage).

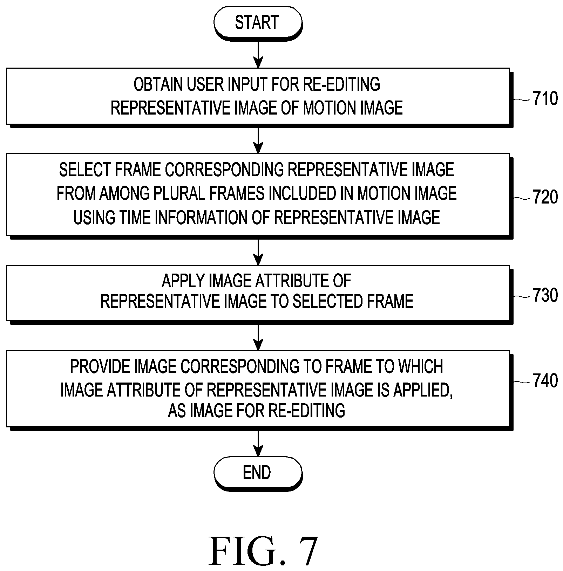

FIG. 7 is an exemplary diagram illustrating a function or operation of storing time information (e.g., a timestamp) of an original image (e.g., the second representative image 470) of an edited image (e.g., a third representative image 620) and performing re-editing on the third representative image 620 using the time information by the electronic device 101 according to an embodiment of the disclosure.

Referring to FIG. 7, in operation 710, the electronic device 101 according to an embodiment of the disclosure may obtain a user input for re-editing a representative image (e.g., the third representative image 620) of the motion image 300. The electronic device 101 according to an embodiment of the disclosure may receive, for example, a request to execute an application for image editing from the user. Editing according to an embodiment of the disclosure may include, for example, non-destructive editing and/or continuity editing for imparting a new visual effect to an image or modifying a previously applied visual effect, while maintaining a previously applied visual effect. The electronic device 101 according to an embodiment of the disclosure may execute the application for image editing upon obtaining the user input in operation 710.

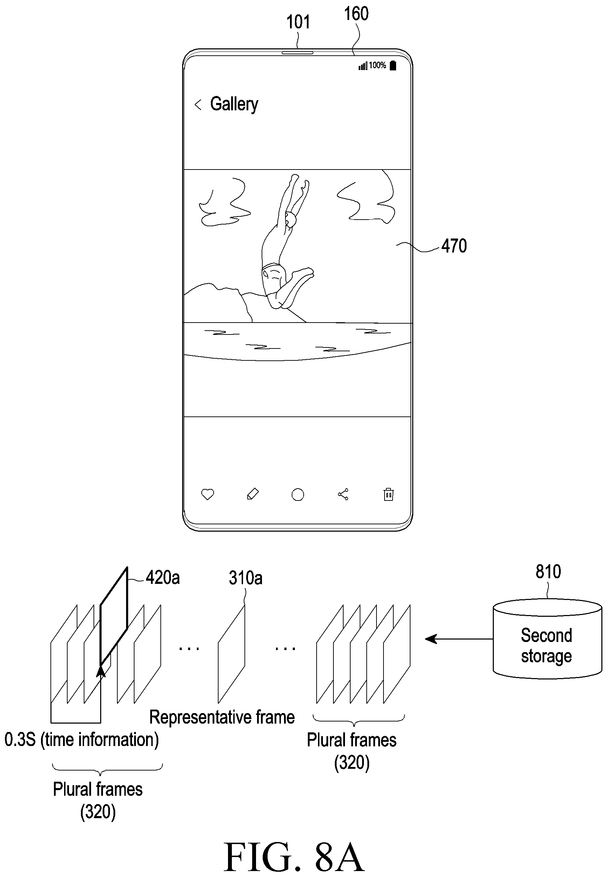

In operation 720, the electronic device 101 according to an embodiment of the disclosure may select a frame corresponding to the representative image (e.g., the third representative image 620) among the plurality of frames included in the motion image 300 by using time information of the representative image (e.g., the third representative image 620). For image editing (e.g., non-destructive editing), instead of storing original image data (e.g., the first frame 420a as bitmap data) of the representative image (e.g., the third representative image 620) in a storage (e.g., the first storage 610 and/or the second storage 810), the electronic device 101 according to an embodiment of the disclosure may store time information (e.g., a timestamp) corresponding to the original image data (e.g., the first frame 420a) in the electronic device 101 (e.g., the memory 130). The electronic device 101 according to an embodiment of the disclosure may access the first frame 420a among the plurality of frames 320 using the stored time information. FIG. 8A is an exemplary diagram illustrating a function or operation of selecting a frame corresponding to time information from a video file using the time information by the electronic device 101 according to an embodiment of the disclosure. Referring to FIG. 8A, based on the user input received in operation 710, the electronic device 101 according to an embodiment of the disclosure may select the first frame 420a among the plurality of frames 320 using the time information (e.g., 0.3 seconds) corresponding to the first frame 420a.

In operation 730, the electronic device 101 according to an embodiment of the disclosure may apply image attributes of a representative image (e.g., the second representative image 470 and/or the third representative image 620) to the selected frame. When a non-destructive editing request is received from the user, the electronic device 101 according to an embodiment of the disclosure may apply the image attributes of the second representative image 470 to the frame selected in operation 720 in substantially the same manner. According to an embodiment of the disclosure, the image attributes of the first representative image 310 may not yet be applied to the frame selected in operation 720. Therefore, for image editing (e.g., non-destructive editing and/or continuity editing), the electronic device 101 according to an embodiment of the disclosure may apply the image attributes of the first representative image 310 to the first frame 420a and provide it to the user. The plurality of frames 320 (e.g., the motion image 300 that does not include the second representative image 470) according to an embodiment of the disclosure may be stored in the second storage 810 (e.g., hidden storage). The plurality of frames 320 stored in the second storage 810 (e.g., hidden storage) according to an embodiment of the disclosure may not be accessible by the user. The electronic device 101 according to an embodiment of the disclosure may select the first frame 420a by accessing the plurality of frames 320 stored in the second storage 810 (e.g., hidden storage) based on the user input received in operation 710 and the time information. In operation 730, the electronic device 101 according to an embodiment of the disclosure may apply image attributes applied to the original representative image (e.g., the first representative image 310) to the first frame 420a. For example, the electronic device 101 according to an embodiment of the disclosure may determine whether an HDR attribute is applied to the first representative image 310. When the HDR attribute is applied to the first representative image 310, the electronic device 101 according to an embodiment of the disclosure may generate a gain map for the selected video frame (e.g., the first frame 420a). Based on the generated gain map, the electronic device 101 according to an embodiment of the disclosure may at least temporarily store the first frame 420a to which the HDR attribute is applied, and for non-destructive editing, display an image (e.g., the second representative image 470) corresponding to the first frame 420a to which the HDR attribute is applied through the display module 160. The electronic device 101 according to an embodiment of the disclosure may at least temporarily store the generated gain map.

When the first representative image 310 according to an embodiment of the disclosure is identified as an image based on a resolution of 12 megapixels, the electronic device 101 may upscale the selected video frame (e.g., the first frame 420a) to 12 megapixels, store it at least temporarily in the electronic device 101, and for non-destructive editing, display an image (e.g., the second representative image 470) corresponding to the upscaled first frame 420a through the display module 160. In this case, the gain map according to an embodiment of the disclosure may also be upscaled at the same ratio. Alternatively, for example, when the original representative image (e.g., the first representative image 310) includes an image based on WCG P3 color and the selected video frame (e.g., the first frame 420a) uses an sRGB color space, an image in which a color space attribute is changed by applying a WCG P3 transform scheme (e.g., an sRGB to P3 transform scheme) to the first frame 420a may be at least temporarily stored as the representative image in the electronic device 101. When the original representative image (e.g., the first representative image 310) includes an image based on an sRGB color and the selected video frame (e.g., the first frame 420a) uses a WCG P3 color space, an image in which the color space attribute is changed by applying an sRGB transform scheme (e.g., a P3 to sRGB transform scheme) to the first frame 420a may be at least temporarily stored as the representative image in the electronic device 101. Alternatively, for example, EXIF information and/or an ICC profile of the original representative image (e.g., the first representative image 310) may be applied to the first frame 420a.

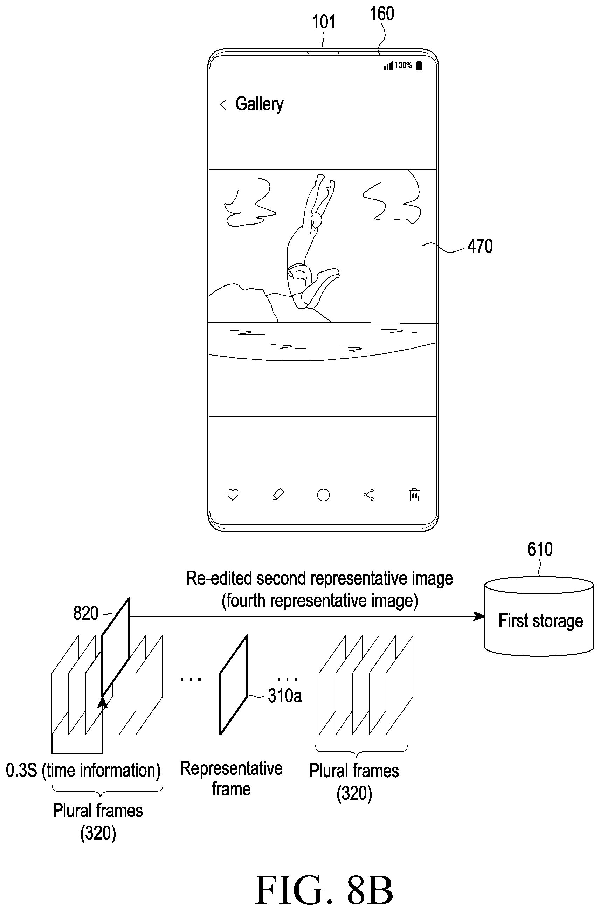

In operation 740, the electronic device 101 according to an embodiment of the disclosure may provide an image corresponding to the frame to which the image attributes of the representative image (e.g., the first representative image 310) are applied as an image for re-editing. For example, the electronic device 101 according to an embodiment of the disclosure may provide the image to which the image attributes of the first representative image 310 are applied in operation 730 as an image for re-editing (e.g., non-destructive editing). Alternatively, when continuity editing is selected by the user, the electronic device 101 according to an embodiment of the disclosure may provide the image to the user by applying a visual effect applied to the third representative image 620 in substantially the same manner to the image to which the image attributes of the first representative image 310 are applied in operation 730. The electronic device 101 according to an embodiment of the disclosure may obtain a user input for non-destructive editing and/or continuity editing. The electronic device 101 according to an embodiment of the disclosure may store the image on which non-destructive editing and/or continuity editing has been performed as a fourth representative image 820 in the electronic device 101 (e.g., the first storage 610). FIG. 8B is an exemplary diagram illustrating a function or operation of storing a re-edited representative image (e.g., the fourth representative image 820) in the first storage 610 according to an embodiment of the disclosure. Referring to FIG. 8B, the electronic device 101 according to an embodiment of the disclosure may store the motion image 300 including the re-edited representative image (e.g., the fourth representative image 820) in the electronic device 101 (e.g., the first storage 610). Accordingly, the re-edited representative image (e.g., the fourth representative image 820) according to an embodiment of the disclosure may be accessed by the user. According to an embodiment of the disclosure, when re-editing (e.g., non-destructive editing and/or continuity editing) is performed on an image (e.g., the third representative image 620) obtained by editing a changed representative image, the electronic device 101 may perform re-editing based on the original frame extracted from the video file using time information (e.g., a timestamp) of the changed representative image (e.g., the second representative image 470) in order to provide the re-edited image (e.g., the fourth representative image), thereby efficiently utilizing memory resources.

FIG. 9 is an exemplary diagram illustrating the electronic device 101 according to an embodiment of the disclosure.

Referring to FIG. 9, the electronic device 101 according to an embodiment of the disclosure may include a processor 910 (e.g., the processor 120 of FIG. 1), a display module 920 (e.g., the display module 160 of FIG. 1), and/or a camera module (e.g., the camera module 180 of FIG. 1). The processor 910 according to an embodiment of the disclosure may include the representative image extractor 912, the photo image attribute extractor 914, and/or the rendering attribute data generator 916. The representative image extractor 912, the photo image attribute extractor 914, and/or the rendering attribute data generator 916 according to an embodiment of the disclosure may be implemented as hardware or software included in the processor 910, or may be implemented as hardware operatively connected to the processor 910 or a software module included in the hardware.

The representative image extractor 912 according to an embodiment of the disclosure may be configured to extract a representative image included in an original motion image upon execution of a specified application (e.g., an editing application). The photo image attribute extractor 914 according to an embodiment of the disclosure may extract image attributes (e.g., image resolution, SDR attribute, HDR attribute, color space information, EXIF information, ICC profile, and/or SEF data) of an original photo image. The rendering attribute data generator 916 according to an embodiment of the disclosure may extract attributes required for image rendering and generate necessary rendering data during the execution of the specified application (e.g., an image editing application). For example, when the original photo image is an image to which an HDR attribute is applied, the rendering attribute data generator 916 according to an embodiment of the disclosure may generate a gain map based on a bitmap image of a selected video frame. The rendering attribute data generator 916 according to an embodiment of the disclosure may apply the generated rendering data to a preview image.

The descriptions of the display module 160 and the camera module 180 in FIG. 1 may be applied equally to the display module 920 and the camera module 930 according to an embodiment of the disclosure.

The electronic device 101 according to an embodiment of the disclosure may include a touch screen display (e.g., the display module 160 of FIG. 1), at least one camera (e.g., the camera module 180 of FIG. 1), at least one processor (e.g., the processor 120 of FIG. 1), and memory (e.g., the memory 130 of FIG. 1), and the memory may be configured to store instructions that, when executed by the at least one processor, cause the electronic device to capture a motion image via the at least one camera, wherein the motion image includes a representative frame corresponding to a first representative image and a plurality of frames, receive a user input for selecting a first frame from among the plurality of frames included in the motion image in order to change the first representative image into a second representative image that is different from the first representative image, identify an image attribute of the first representative image and apply the identified the image attribute to the selected first frame, based on the user input, and display the first frame to which the identified image attribute is applied as the second representative image for the motion image via the touch screen display.

According to an embodiment of the present disclosure, the instructions may further include instructions that, when executed by the at least one processor, cause the electronic device to, when the image attribute includes an HDR attribute and an attribute of the plurality of frames has an SDR attribute, generate a gain map for the first frame and apply the gain map to the first frame.

According to an embodiment of the present disclosure, the instructions may further include instructions that, when executed by the at least one processor, cause the electronic device to, when the image attribute includes a WCG(wide color gamut) P3 pixel attribute and the attribute of the plurality of frames includes an sRGB pixel attribute, transform bitmap color data of the first frame according to a transform scheme for changing the attribute of the first frame into the WCG P3 pixel attribute.

According to an embodiment of the present disclosure, the instructions may further include instructions that, when executed by the at least one processor, cause the electronic device to, when the image attribute includes a first resolution attribute and the attribute of the plurality of frames has a second resolution attribute different from the first resolution, perform a scaling process so that the attribute of the first frame has the first resolution attribute.

According to an embodiment of the present disclosure, the instructions may further include instructions that, when executed by the at least one processor, cause the electronic device to, based on a user input for storing a third representative image having an attribute changed from an attribute of the second representative image, store time information corresponding to the first frame among the plurality of frames.

According to an embodiment of the present disclosure, the instructions may further include instructions that, when executed by the at least one processor, cause the electronic device to, when a user input for re-changing an attribute of the second representative image to a fourth representative image is received, select the first frame corresponding to the time information among the plurality of frames, and perform the re-changing based on the selected first frame.

The image attribute may further include metadata for the first representative image, and the metadata includes EXIF information, color space information and an ICC profile.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2540) including one or more instructions that are stored in a storage medium (e.g., internal memory 2536 or external memory 2538) that is readable by a machine (e.g., the electronic device 2501). For example, a processor of the machine (e.g., the electronic device 2501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, each component (e.g., a module or a program) of the above-described components may include a single entity or multiple entities, and some of the multiple entities may be separately disposed in different components. According to an embodiment of the disclosure, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a touch screen display,
at least one camera,
at least one processor, and
memory storing instructions that, when executed by the at least one processor, cause the electronic device to:
capture a motion image via the at least one camera, wherein the motion image includes a representative frame corresponding to a first representative image and a plurality of frames,
in order to change the first representative image into a second representative image that is different from the first representative image, receive a user input for selecting a first frame from among the plurality of frames included in the motion image,
identify an image attribute of the first representative image and apply the identified the image attribute to the selected first frame, based on the user input, and
display the first frame to which the identified image attribute is applied as the second representative image for the motion image via the touch screen display.

2. The electronic device of claim 1, further comprising instructions that, when executed by the at least one processor, cause the electronic device to:
when the image attribute includes a high dynamic range (HDR) attribute and an attribute of the plurality of frames has a standard dynamic range (SDR) attribute, generate a gain map for the first frame and apply the gain map to the first frame.

3. The electronic device of claim 1 or 2, further comprising instructions that, when executed by the at least one processor, cause the electronic device to:
when the image attribute includes a WCG(wide color gamut) P3 pixel attribute and the attribute of the plurality of frames includes an sRGB pixel attribute, transform bitmap color data of the first frame according to a transform scheme for changing the attribute of the first frame into the WCG P3 pixel attribute.

4. The electronic device of any one of claims 1 to 3, further comprising instructions that, when executed by the at least one processor, cause the electronic device to:
when the image attribute includes a first resolution attribute and the attribute of the plurality of frames has a second resolution attribute different from the first resolution, perform a scaling process so that the attribute of the first frame has the first resolution attribute.

5. The electronic device of any one of claims 1 to 4, further comprising instructions that, when executed by the at least one processor, cause the electronic device to:
based on a user input for storing a third representative image having an attribute changed from an attribute of the second representative image, store time information corresponding to the first frame among the plurality of frames.

6. The electronic device of any one of claims 1 to 5, further comprising instructions that, when executed by the at least one processor, cause the electronic device to:
when a user input for re-changing an attribute of the second representative image to a fourth representative image is received, select the first frame corresponding to the time information among the plurality of frames, and perform the re-changing based on the selected first frame.

7. The electronic device of any one of claims 1 to 6, wherein the image attribute further includes metadata for the first representative image, and the metadata includes EXIF information, color space information and an ICC profile.

8. A non-transitory computer-readable recording medium configured to store computer-readable instructions that, when executed by a processor of an electronic device, cause the electronic device to:
capture a motion image via at least one camera of the electronic device, wherein the motion image includes a representative frame corresponding to a first representative image and a plurality of frames,
in order to change the first representative image into a second representative image that is different from the first representative image, receive a user input for selecting a first frame from among the plurality of frames included in the motion image,
identify an image attribute of the first representative image and apply the identified the image attribute to the selected first frame, based on the user input, and
display the first frame to which the identified image attribute is applied as the second representative image for the motion image via a touch screen display of the electronic device.

9. The non-transitory computer-readable recording medium of claim 8, wherein the instructions further include instructions that, when executed by the processor of the electronic device, cause the electronic device to:
when the image attribute includes a high dynamic range (HDR) attribute and an attribute of the plurality of frames has a standard dynamic range (SDR) attribute, generate a gain map for the first frame and apply the gain map to the first frame.

10. The non-transitory computer-readable recording medium of claim 8 or 9, wherein the instructions further include instructions that, when executed by the processor of the electronic device, cause the electronic device to:
when the image attribute includes a WCG(wide color gamut) P3 pixel attribute and the attribute of the plurality of frames includes an sRGB pixel attribute, transform bitmap color data of the first frame according to a transform scheme for changing the attribute of the first frame into the WCG P3 pixel attribute.

11. The non-transitory computer-readable recording medium of any one of claims 8 to 10, wherein the instructions further include instructions that, when executed by the processor of the electronic device, cause the electronic device to:
when the image attribute includes a first resolution attribute and the attribute of the plurality of frames has a second resolution attribute different from the first resolution, perform a scaling process so that the attribute of the first frame has the first resolution attribute.

12. The non-transitory computer-readable recording medium of any one of claims 8 to 11, wherein the instructions further include instructions that, when executed by the processor of the electronic device, cause the electronic device to:
based on a user input for storing a third representative image having an attribute changed from an attribute of the second representative image, store time information corresponding to the first frame among the plurality of frames.

13. The non-transitory computer-readable recording medium of any one of claims 8 to 12, wherein the instructions further include instructions that, when executed by the processor of the electronic device, cause the electronic device to:
when a user input for re-changing an attribute of the second representative image to a fourth representative image is received, select the first frame corresponding to the time information among the plurality of frames, and perform the re-changing based on the selected first frame.

14. The non-transitory computer-readable recording medium of any one of claims 8 to 13, wherein the image attribute further includes metadata for the first representative image, and the metadata includes EXIF information, color space information and an ICC profile.

15. A method for controlling an electronic device, comprising:
capturing a motion image via at least one camera of the electronic device, wherein the motion image includes a representative frame corresponding to a first representative image and a plurality of frames,
in order to change the first representative image into a second representative image that is different from the first representative image, receiving a user input for selecting a first frame from among the plurality of frames included in the motion image,
identifying an image attribute of the first representative image and applying the identified the image attribute to the selected first frame, based on the user input, and
displaying the first frame to which the identified image attribute is applied as the second representative image for the motion image via a touch screen display of the electronic device.
